# Europäisches Patentamt
# European Patent Office
# Office européen des brevets

(19)

(11) Veröffentlichungsnummer: **0 031 004**
**B1**

(12)

# EUROPÄISCHE PATENTSCHRIFT

(45) Veröffentlichungstag der Patentschrift:
14.03.84

(21) Anmeldenummer: **80106028.6**

(22) Anmeldetag: **04.10.80**

(51) Int. Cl.³: **G 05 G 1/10**

(54) **Bedienungsknopf für Fensterkurbeln von Fahrzeugen.**

(30) Priorität: **22.12.79 DE 2952057**

(43) Veröffentlichungstag der Anmeldung:
**01.07.81 Patentblatt 81/26**

(45) Bekanntmachung des Hinweises auf die Patenterteilung:
**14.03.84 Patentblatt 84/11**

(84) Benannte Vertragsstaaten:
**DE FR GB IT SE**

(56) Entgegenhaltungen:
**DE - A - 2 204 480**
**DE - A - 2 817 127**
**DE - B - 2 453 484**
**DE - U - 7 303 571**
**FR - A - 2 236 374**
**GB - A - 1 217 393**
**GB - A - 1 429 298**
**GB - A - 1 434 300**
**GB - A - 2 046 192**
**US - A - 2 978 927**
**US - A - 4 052 768**

(73) Patentinhaber: **Gebr. Happich GmbH,**
**Postfach 10 02 49 Clausenbrücke 1,**
**D-5600 Wuppertal 1 (DE)**

(72) Erfinder: **Dietz, Günter, Eggenbruch 97,**
**D-5600 Wuppertal 1 (DE)**
Erfinder: **Flagmeyer, Friedhelm, Am Engelnberg 21,**
**D-5600 Wuppertal 1 (DE)**

(74) Vertreter: **Rehders, Jochen, c/o Fa. Gebr. Happich**
**GmbH Postfach 10 02 49 Clausenbrücke 1,**
**D-5600 Wuppertal 1 (DE)**

BUNDESDRUCKEREI BERLIN

## Bedienungsknopf für Fensterkurbeln von Fahrzeugen

Die Erfindung bezieht sich auf einen Bedienungsknopf der im Oberbegriff des Patentanspruchs 1 angegebenen Art.

Ein gattungsgemäßer Bedienungsknopf ist in den Unterlagen der DE-A-2 204 480 beschrieben und in den Fig. 5 und 6 dieser Druckschrift dargestellt. Im einzelnen besteht der bekannte Bedienungsknopf aus einem als Handhabe dienenden äußeren Knopfteil aus relativ weichem Kunststoff und einem inneren Knopfteil aus relativ hartem Kunststoff. Der äußere Knopfteil aus weichelastischem Kunststoff ist auf den inneren Knopfteil drehfest aufgeformt und dadurch dauerhaft mit diesem verbunden. Der innere Knopfteil besteht aus einem Schaft, dessen aus dem äußeren Knopfteil heraustretender freier Endbereich drehbar in einer Stecköffnung eines Kurbelarmes gelagert ist. Der Schaft besitzt zwei flanschartige Bunde, die mit den beiden Stirnflächen eines am Kurbelarm vorgesehenen Ansatzes, in dem sich die Stecköffnung befindet, zusammenwirken, um den Bedienungsknopf an dem Kurbelarm festzuhalten. Der aus dem äußeren Knopfteil heraustretende freie Endbereich des Schaftes besteht aus drei in Abstand voneinander angeordneten Rastzapfen, an deren Außenflächen jeweils endseitig ein den Rand der Stecköffnung hintergreifender Rastnocken angeformt ist. Weiterhin ist der freie Endbereich des Schaftes mit einer zentralen Bohrung versehen, in der ein die Rastzapfen auf Abstand haltender Spreizbolzen sitzt.

Bei dem bekannten Bedienungsknopf erscheint es zunächst aufwendig, den äußeren Knopfteil durch Aufformen auf den inneren Knopfteil zu bilden, weil es hierfür erforderlich ist, den inneren Knopfteil von Hand in eine entsprechende Herstellungsform einzulegen. Auch ist es im Hinblick auf die Herstellung und auf die Montage unzweckmäßig, daß der freie Endbereich aus drei in Abstand voneinander angeordneten Rastzapfen besteht. Die Maßnahme der rotationssymmetrischen Ausbildung der Stecköffnung des Kurbelarmes und des darin drehbar aufgenommenen Schaftes des Bedienungsknopfes bedeutet im praktischen Gebrauch einen erhöhten Verschleiß durch Abrieb und damit auf Dauer gesehen keine zuverlässige Festlegung des Bedienungsknopfes am Kurbelarm. Ferner darf der in die zentrale Bohrung des Schaftes eingeschobene Spreizbolzen kein Übermaß in bezug auf den Bohrungsdurchmesser aufweisen, weil andernfalls die Rastzapfen gegen die Lochwandung der Stecköffnung gepreßt würden und die drehbewegliche Lagerung des Bedienungsknopfes am Kurbelarm in Frage gestellt wäre. Insbesondere weist der bekannte Bedienungsknopf noch den Mangel auf, daß die Materialelastizität des äußeren Knopfteils allein erfahrungsgemäß nicht ausreicht, um die notwendige Dämpfung und Unschädlichmachung eines Aufpralles auf den Bedienungsknopf zu erzielen, so daß bei einem Aufprall auf den Bedienungsknopf Körperverletzungen zu befürchten sind.

Die DE-A-2 817 127 zeigt eine Fensterkurbel mit einem Kurbelarm, der einendig eine Nabe zum Aufsetzen auf den Achszapfen einer Fensterbetätigungsmechanik und anderendig einen einen Drehknopf tragenden Zapfen aufweist. Dieser mit dem Kurbelarm einstückige Zapfen ist konisch ausgebildet und in seinem konischen Bereich dadurch geschwächt, daß sich eine zylindrische Ausnehmung bis fast zum Außenrand dieses Bereichs erstreckt. Hierdurch soll eine Sollbruchstelle mit dem Vorteil erreicht weden, daß sie auf Überlastung aus jeder beliebigen Richtung durch Bruch reagiert. Es handelt sich also hier darum, den Kurbelarm selber so zu gestalten, daß er bei einem Aufprall auf den Drehknopf abzubrechen vermag, während der Drehknopf keine Gestaltungsmerkmale aufweist, die geeignet sind, Unfälle zu vemeiden.

Der Erfindung liegt nun die Aufgabe zugrunde, einen Bedienungsknopf der eingangs genannten Art zu schaffen, der sich durch eine einfache und kostengünstige Herstellbarkeit und Montierbarkeit ebenso auszeichnen soll wie durch eine besonders zuverlässige und dauerhafte Befestigung am Kurbelarm und der darüber hinaus geeignet ist, bei einem Aufprall Körperverletzungen zu vermeiden, indem er, ähnlich wie es beim Zapfen des Kurbelarms nach der DE-A-2 817 127 der Fall ist, bei Überlastung durch Bruch reagiert.

Gemäß der Erfindung wird diese Aufgabe dadurch gelöst, daß der aus dem äußeren Knopfteil heraustretende freie Endbereich des Lagerzapfens aus zwei im Abstand voneinander angeordneten Rastzapfen besteht, von denen zumindest einer einen eine Rastausnehmung bildenden Schlitz aufweist, daß das Sperrglied als Kunststoff-Spritzgußteil mit zumindest einem daran angeformten Rastnocken zum Einrasten in den Schlitz ausgebildet ist, daß die Stecköffnung des Kurbelarms einen unrunden Öffnungsquerschnitt zur verdrehfesten Aufnahme der Rastzapfen aufweist, und daß am Lagerzapfen in Höhe des Anschlußteils des Kurbelarms eine durch eine umlaufende Querschnittsverjüngung gebildete Sollbruchstelle ausgebildet ist.

Vorteilhafte Ausgestaltungen und zweckmäßige Weiterbildungen der Erfindung sind in den Unteransprüchen gekennzeichnet.

Es zeigt

Fig. 1 den an einer Fensterkurbel montierten Bedienungsknopf im Vertikalschnitt,

Fig. 2 eine vergrößerte Einzelheit des Bedienungsknopfes nach Fig. 1,

Fig. 3 ein Sperrglied für den Bedienungsknopf in Draufsicht,

Fig. 4 einen Schnitt A-A nach Fig. 3 und

Fig. 5 eine Seitenansicht nach Fig. 4.

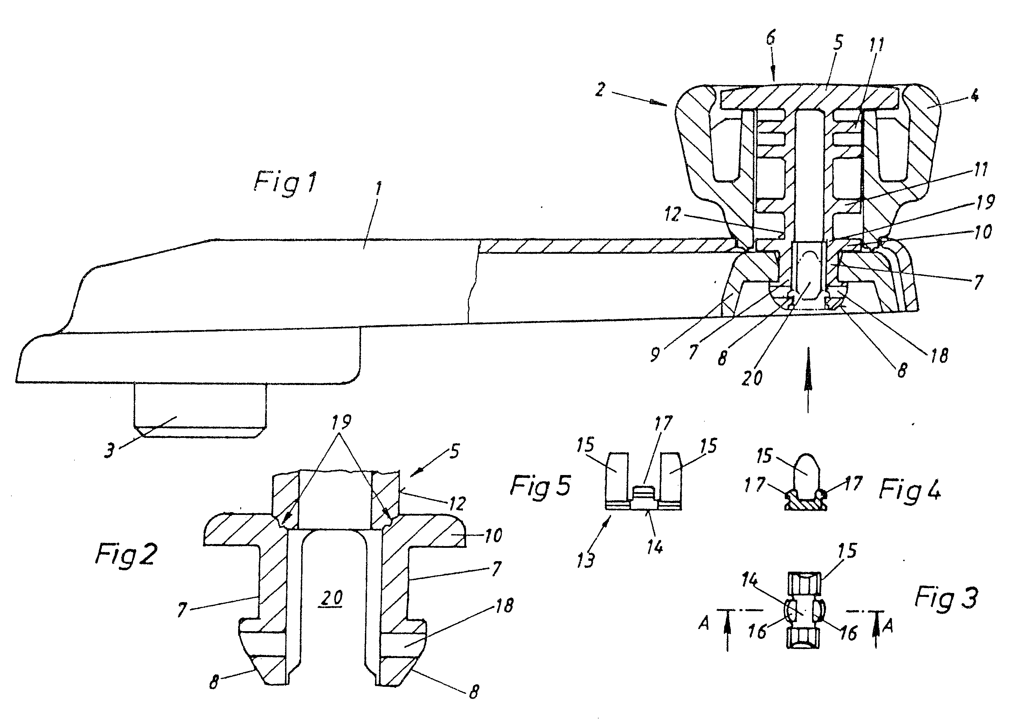

Fig. 1 zeigt eine Fensterkurbel, die auf dem freien Ende ihres Kurbelarms 1 den Bedienungsknopf 2 trägt. Die am Kurbelarmende sitzende Nabe 3 ist mit dem anzutreibenden Zapfen eines ortsfesten, nicht dargestellten Fenstergetriebe lösbar verbunden.

Der Bedienungsknopf 2 besteht aus einem als Handhabe dienenden äußeren Knopfteil 4 aus relativ weichem Kunststoff und aus einem inneren Knopfteil, der als hohler Lagerzapfen 5 ausgebildet ist und aus einem relativ harten Kunststoff besteht. Der Lagerzapfen 5 besitzt einendig einen Kopfflansch 6, der den Knopfteil 4 bereichsweise übergreift und gegen ein Abziehen sichert. Anderendig weist der Lagerzapfen 5 zwei im Abstand einander gegenüberliegende und parallel zueinander verlaufende Rastzapfen 7 mit an den Außenflächen angeformten Rastnocken 8 auf. Die Rastzapfen 7 sind an einem sich auf das Anschlußteil 9 des Kurbelarmes 1 abstützenden Flansch 10 angeformt. Der Flansch 10 übernimmt mit weiteren Radialflanschen 11 die Laufführung des eine entsprechende Bohrung aufweisenden äußeren Knopfteils 4. An den Flansch 10 schließt sich an der den Rastzapfen 7 abgewandten Seite ein im Durchmesser verjüngter Lagerzapfenbereich 12 an.

Bei der Montage des Bedienungsknopfes 2 wird zunächst der äußere Knopfteil 4 über den Lagerzapfen 5 geschoben und hiernach der so vervollständigte Bedienungsknopf 2 an den Kurbelarm 1 angebracht. Hierfür ist es lediglich erforderlich, die Rastzapfen 7 durch eine ihnen angepaßte unrunde Öffnung des Anschlußteils 9 zu stecken. Dabei federn die Rastzapfen 7 gegeneinander und wieder zurück, sobald die Rastnocken 8 die Öffnung passiert haben und die Öffnungsränder hintergreifen. Danach ist der Lagerzapfen 5 drehfest montiert, während der äußere Knopfteil 4 drehbeweglich gelagert ist.

Damit sich die Rastzapfen 7 bei einer Stoßbelastung des Bedienungsknopfes 2 nicht aus ihrer Befestigung lösen können, sind sie durch ein ihren Abstand voneinander sicherndes Sperrglied 13 blockiert. In Fig. 1 ist das zwischen den Rastzapfen 7 sitzende Sperrglied 13 strichpunktiert angedeutet.

Die besondere Ausgestaltung des Sperrgliedes 13 ist in den Fig. 3 bis 5 dargestellt. Es besitzt eine U-förmige Ausbildung mit einem Scheitelschenkel 14 und zwei Seitenschenkeln 15, deren freie Enden abgerundet sind. Zwischen den Seitenschenkeln 15 sind am Scheitelschenkel 14 seitlich zwei Rastfederarme 16 mit an der Außenseite angeordneten Rastnocken 17 angeformt. Das Sperrglied 13 kann von Hand zwischen die Rastzapfen 7 gesteckt werden und erhält dort eine selbsttragende Halterung durch die Rastnocken 17, die in dafür vorgesehene Schlitze 18 der Rastzapfen 7 einrasten.

Damit der auf diese Weise zuverlässig am Kurbelarm 1 festgelegte Bedienungsknopf 2 bei einer übergroßen Aufprallkraft wegbrechen kann, besitzt der Lagerzapfen 5 eine definierte Sollbruchstelle 19, deren Lage besonders deutlich aus Fig. 2 zu erkennen ist, indem dort der Bruchverlauf angedeutet ist. Der Hohlraum des Lagerzapfens 5 ist als Stufenbohrung ausgebildet, deren im Durchmesser größere Stufe 20, von den Rastzapfen 7 ausgehend, im Übergangsbereich des Flansches 10 zu dem verjüngten Lagerzapfenbereich 12 unter Bildung einer umlaufenden Querschnittsverjüngung endet. Die Bohrungsstufe 20 spart auch aus den Rastzapfen 7 jeweils einen, im Querschnitt gesehen, kreissegmentförmigen Bereich aus. Aus diesem Grunde sind die Rastnocken 17 des Sperrgliedes 13 außenseitig entsprechend abgerundet ausgebildet.

## Patentansprüche

1. Bedienungsknopf für Fensterkurbeln von Fahrzeugen, mit einem als Handhabe dienenden äußeren Knopfteil (4) aus relativ weichem Kunststoff und einem aus relativ hartem Kunststoff bestehenden inneren Knopfteil, der als Lagerzapfen (5) ausgebildet ist, dessen aus dem äußeren Knopfteil (4) heraustretender freier Endbereich in einer Stecköffnung des Kurbelarms (1) angeordnet ist und aus mehreren in Abstand voneinander angeordneten Rastzapfen (7) besteht, an deren Außenflächen jeweils endseitig ein den Rand der Stecköffnung hintergreifender Rastnocken (8) angeformt ist, welcher freier Endbereich zugleich eine sich axial erstreckende Bohrung (20) aufweist, in der ein die Rastzapfen (7) steckbares Sperrglied (13) sitzt, dadurch gekennzeichnet, daß der aus dem äußeren Knopfteil (4) heraustretende freie Endbereich des Lagerzapfens (5) aus zwei im Abstand voneinander angeordneten Rastzapfen (7) besteht, von denen zumindest einer einen eine Rastausnehmung bildenden Schlitz (18) aufweist, daß das Sperrglied (13) als Kunststoff-Spritzgußteil mit zumindest einem daran angeformten Rastnocken (17) zum Einrasten in den Schlitz (18) ausgebildet ist, daß die Stecköffnung des Kurbelarms (1) einen unrunden Öffnungsquerschnitt zur verdrehfesten Aufnahme der Rastzapfen (7) aufweist, und daß am Lagerzapfen (5) in Höhe des Anschlußteils (9) des Kurbelarms (1) eine durch eine umlaufende Querschnittsverjüngung gebildete Sollbruchstelle (19) ausgebildet ist.

2. Bedienungsknopf nach Anspruch 1, dadurch gekennzeichnet, daß der Rastnocken (17) an einem am Sperrglied (13) angeformten Rastfederarm (16) angeordnet ist.

3. Bedienungsknopf nach Anspruch 1 oder 2, dadurch gekennzeichnet, daß die Rastzapfen (7) jeweils eine ewa rechteckige Querschnittsfläche, einen sie querenden, jeweils eine Rastausnehmung für die Rastnocken (17) des Sperrgliedes (13) bildenden Schlitz (18) und eine parallel zueinander verlaufende Anordnung aufweisen.

4. Bedienungsknopf nach einem oder mehreren der Ansprüche 1 bis 3, dadurch gekennzeichnet, daß das Sperrglied (13) U-förmig ausgebildet ist und zwei am Scheitelschenkel (14) jeweils seitlich angeformte Rastfederarme (16) aufweist, die zwischen den Seitenschenkeln (15) verlaufen.

5. Bedienungsknopf nach einem oder mehreren der Ansprüche 1 bis 4, dadurch gekennzeichnet, daß der Lagerzapfen (5) befestigungsseitig einen sich auf das Anschlußteil (9) abstützenden Flansch (10) besitzt, an dem sich einseitig koaxial ein im Durchmesser verjüngter Lagerzapfenbereich (12) und anderseitig die Rastzapfen (7) anschließen und daß im Lagerzapfen (5) eine von den Rastarmen (7) ausgehende, im Übergangsbereich des Flansches (10) zu dem verjüngten Lagerzapfenbereich (12) eine umlaufende Querschnittsverjüngung bildende Bohrung (20) angeordnet ist.

## Claims

1. An operating knob for a winding crank of a vehicle window, the knob comprising an outer component (4) made of a comparatively soft plastics material and serving as a handle, and an inner component of a comparatively hard plastics material forming a journal (5) a free end portion of which protruding from the outer component (4) is insertable into an aperture of the crank arm (1) and consists of a number of spacedly arranged click-in lugs (7), wherein a latch (8) to be clawed behind the edge of the aperture is joined integrally to the external end face of each lug, and wherein said free end portion has an axially exending bore (20) in which a locking member (13) serving to maintain the spacing between the click-in lugs (7) and insertable between them is disposed, characterized in that the free end portion of the journal (5) protruding from the outer component (4) of the knob consists of two spacedly arraned click-in lugs (7) at least one of which is provided with a slot (18) forming a snap-in recess, that the locking member (13) is an injection-moulded plastics component having at least one integrally formed snap-in dog (17) arranged to snap into the slot (18), that for holding the click-in lugs (7) fast against rotation the cross-section of the aperture in the crank arm (1) is other than circular, and in that the journal (5) incorporates a predetermined breaking point (19) in the form of an annularly continuous reduction of its cross-section, the breaking point being locatable substantially level with the top of a connector element (9) of the crank arm (1).

2. An operating knob according to claim 1, characterized in that the or each snap-in dog (17) is arranged on a click-in spring (16) formed integrally with the locking member (13).

3. An operating knob according to claim 1 or claim 2, characterized in that each of the click-in lugs (7) is of substantially rectangular cross-section and is traversed by a respective slot (18) forming the snap-in recess for a respective one of the snap-in dogs (17) of the locking member (13), and in that the lugs (7) are arranged parallel with each other.

4. an operating knob according to any one or more of the claims 1 to 3, characterized in that the locking member (13) is U-shaped, and in that two integrally formed click-in springs (16) extend, one from each side face of the base (14), between the legs (15) of the U.

5. An operating knob according to any one or more of the claims 1 to 4, characterized in that the journal (5) is provided at its portion to be secured with a flange (10) arranged to be supported by the connector element (9), that one side of the flange is bordered by a coaxial but diametrically reduced journal section (12) and the other side by the lugs (7), and in that the journal's (5) bore (20) which starts at the lugs (7) terminates with its cross-sectional reduction in the transitional region from the flange (10) to the reduced journal section (12).

## Revendications

1. Bouton de manoeuvre pour manivelles de lève-vitre de véhicules automobiles, comportant une partie extérieure (4) en matière plastique relativement molle servant de prise et une partie intérieure en matière plastique relativement dure réalisée sous la forme d'un tourillon (5) dont la zone terminale libre sortant de la partie extérieure (4) est placée dans une ouverture d'emboîtement du bras de manivelle (1) et comprend plusieurs ergots de crantage (7) disposés à intervalles mutuels, sur les surfaces extérieures de chacun desquels est formé un bec (8), zone terminale libre qui comporte en même temps un alésage (20) dirigé axialement dans lequel est placé un organe de blocage (13) maintenant les ergots de crantage (7) à distance et pouvant être placé entre les ergots de crantage (7), caractérisé en ce que la zone terminale libre du tourillon (5) sortant de la partie extérieure (4) du bouton comprend deux ergots de crantage (7) séparés par un intervalle mutuel dont l'un au moins comporte une fente (18) constituant une encoche, en ce que l'orange de blocage (13) est réalisé sous la forme d'une pièce en matière plastique moulée par injection comportant au moins un bec (17) qui y est formé, devant s'encliqueter dans la fente (18), en ce que l'ouverture d'emboîtement du bras de manivelle (1) présente une section droite d'ouverture non ronde pour recevoir l'ergot du cranage (7) sans qu'il puisse tourner, et en ce qu'une zone de rupture (19) formée par un rétrécissement de section droite sur toute la périphérie est constituée sur le tourillon (5) au niveau de la partie de raccordement (9) du bras de manivelle (1).

2. Bouton de manoeuvre selon la revendication 1, caractérisé en ce que le bec (17) est placé sur une branche élastique de crantage (16) formée sur l'organe de blocage (13).

3. Bouton de manoeuvre selon la revendication 1 ou 2, caractérisé en ce que les ergots de crantage (7) comportent chacun une surface de section droite sensiblement rectangulaire, une fente (18) le traversant, constituant dans chaque cas une encoche pour les becs (17) de l'organe de blocage (13), et un agencement mutuellement parallèle.

4. Bouton de manoeuvre selon l'une quelconque des revendications 1 à 3, caractérisé en ce que l'organe de blocage (13) est en U et comporte deux branches élastiques de crantage (16) formées chacune latéralement sur la branche de sommet (14), qui sont comprises entre les branches latérales (15).

5. Bouton de manoeuvre selon l'une quelconque des revendications 1 à 4, caractérisé en ce que le tourillon (5) comporte du côté de fixation une bride (10) s'appuyant sur la partie de raccordement (9) à laquelle se raccordent d'un côté coaxialement une zone (12) du tourillon de diamètre réduit et, de l'autre, les ergots de crantage (7), et en ce qu'un alésage (20) formant un rétrécissement de section droite périphérique partant des ergots de crantage (7) est placé dans la zone de transition de la bride (10) avec la zone rétrécie (12) du tourillon.

Fig 1

Fig 2

Fig 3

Fig 4

Fig 5

0 031 004